# EUROPÄISCHE PATENTSCHRIFT

(11) **EP 1 341 681 B1**
(45) Veröffentlichungstag und Bekanntmachung des Hinweises auf die Patenterteilung: **16.02.2005**
(21) Anmeldenummer: 01999209.8
(22) Anmeldetag: 19.11.2001
(51) Int. Cl.: B60C 23/06, B60C 23/04

(54) **VORRICHTUNG UND VERFAHREN ZUR ÜBERWACHUNG DES LUFTDRUCKES IN DEN REIFEN EINES KRAFTFAHRZEUGES**
DEVICE AND METHOD FOR MONITORING AIR PRESSURE IN THE TYRES OF A VEHICLE
DISPOSITIF ET PROCEDE POUR SURVEILLER LA PRESSION D'AIR DANS LES PNEUS D'UNE AUTOMOBILE

(30) Priorität: 05.12.2000 DE 10060392
(43) Veröffentlichungstag der Anmeldung: 10.09.2003
(73) Patentinhaber: Volkswagen Aktiengesellschaft, 38436 Wolfsburg (DE)
(72) Erfinder: PIECH, Ferdinand, 38118 Braunschweig (DE); REINKE, Rolf, 38524 Grussendorf (DE); WEGNER, Berend, 38446 Wolfsburg (DE)
(86) Internationale Anmeldenummer: PCT/EP2001/013366
(87) Internationale Veröffentlichungsnummer: WO 2002/045976

(56) Entgegenhaltungen:
- DE-A- 3 630 116
- "LOWER COST METHOD TO MONITOR TIRE INFLATION PRESSURE FOR EXTENDED-MOBILITY TIRES" RESEARCH DISCLOSURE, KENNETH MASON PUBLICATIONS, HAMPSHIRE, GB, Nr. 407, 1. März 1998 (1998-03-01), Seite 203 XP000773835 ISSN: 0374-4353

## Beschreibung

Die Erfindung bezieht sich auf eine Vorrichtung zur Überwachung des Luftdruckes in den Reifen eines Kraftfahrzeuges, umfassend Einrichtungen zur Bestimmung von die Geschwindigkeiten der Räder des Kraftfahrzeuges charakterisierenden Größen, eine Einrichtung zum Berechnen von Differenzgrößen aus den Radgeschwindigkeitsgroßen, eine Einrichtung zur Auswertung der Differenzgrößen, eine Einrichtung zur direkten Messung des Luftdrucks in einem Reifen eines Rades und zur Übertragung einer den Luftdruck charakterisierenden Größe an die Auswerteeinrichtung. Weiterhin bezieht sich die Erfindung auf ein entsprechendes Verfahren.

Die Einhaltung des richtigen Reifendrucks an einem Kraftfahrzeug ist für die Fahrsicherheit wie auch für den Kraftstoffverbrauch von großer Bedeutung. Es empfiehlt sich daher, den Reifendruck in regelmäßigen Abständen zu kontrollieren, um Druckverluste zu erkennen und geeignete Gegenmaßnahmen zu treffen. In der Regel ist es dabei mit einem Nachfüllen von Druckluft getan. Oftmals wird jedoch von dem Betreiber des Kraftfahrzeugs die Regelmäßigkeit der Kontrollen vernachlässigt, so daß der Reifendruck, beispielsweise durch schleichende Diffusionsverluste, unter ein für den Fahrbetrieb optimales Niveau abfallen kann.

Es sind daher bereits eine Vielzahl von Vorrichtungen vorgeschlagen worden, mit denen eine automatische Warnung des Fahrzeugbetreibers vor einem falschen Reifendruck erfolgen kann. Mit diesen Vorrichtungen lassen sich sowohl relativ schnell auftretende Druckverluste in einzelnen Reifen, die in der Regel durch einen Reifenschaden oder Ventilschaden verursacht werden, als auch langsam verlaufende Druckverluste in allen Reifen feststellen.

Aus der DE 43 03 583 OS und der DE 196 02 593 PS ist in diesem Zusammenhang jeweils ein Reifenventil bekannt, mit dem der Reifendruck unmittelbar an einem Fahrzeugrad gemessen wird. Die ermittelte Druckinformation wird über einen in das Ventil integrierten, batteriebetriebenen Sender an einen Empfänger übertragen. Der Empfänger ist an dem. Fahrzeug stationär angebracht und arbeitet mit einer Auswerteeinrichtung zusammen. Bei einer Druckabweichung wird ein entsprechendes Warnsignal generiert und dem Betreiber des Fahrzeugs zur Anzeige gebracht

Derartige Vorrichtungen sind allerdings sehr aufwendig und komplex, da die Ventile aufgrund der von diesen im Fahrbetrieb verursachten dynamischen Kräfte einerseits sehr klein bauen sollen, andererseits den Ventilen aber gerade im Hinblick auf eine hohe Lebensdauer und ausreichende Sendeleistung für eine sichere Informationsübertragnng Grenzen gesetzt sind und weiterhin die Druckmessung und Datengenerierung vollständig In den Ventilen erfolgen muß.

Neben einer Integration der Druckmessung in die Reifenventile ist es aus der DE 43.09 265 OS bekannt, ein unmittelbar den Reifendruck messendes System teilweise in eine Radfelge einzubetten, womit die räumlichen Einschränkungen etwas vermindert werden. Allerdings erfordert dies die Verwendung spezieller Radfelgen mit in diesen verlaufenden Druckkanälen.

Weiterhin ist es bekannt, die Überwachung des Luftdrucks in den Reifen auf indirekte Art und Weise, d. h. ohne unmittelbare Druckmessung vorzunehmen. Eine entsprechende Vorrichtung ist in der DE 36 30 116 OS als Alternative zu den oben erläuterten Sender/Empfänger-Systemen beschrieben. Bei der Vorrichtung nach der DE 36 30 116 OS werden die in einem Anti-Blockier-System erfaßten Radgeschwindigkeiten zur Ermittlung von Druckveränderungen in den Reifen herangezogen. Hierzu werden die Radgeschwindigkeitssignate oder abgeleitete Signale, wie beispielsweise der dynamische Abrollumfang, miteinander oder mit einem aus den Radsignalen abgeleiteten Referenzsignal verglichen. Aus den Abweichungen wird bei Überschreitung eines Schwellenwertes auf einen Druckverlust geschlossen, der dem Betreiber des Fahrzeugs dann angezeigt wird. Die Auswertung der Signale erfolgt dabei für repräsentative Fahrtzustände. So wird ausgeschlossen, daß Geschwindigkeitsdifferenzen beim Durchfahren einer Kurve zu einer Reifendruckwamung führen.

Bei derartigen, indirekt arbeitenden Systemen sind jedoch schleichende Druckverluste schwer festzustellen, wenn diese an mehreren Reifen gleichzeitig auftreten. In der DE 196 25 544 PS wird daher in diesem Zusammenhang als Abhilfe vorgeschlagen, die von dem Anti-Blockier-System ausgehenden, abgeleiteten Radgeschwindigkeitsinformationen für jedes Rad in einer Histortenliste aufzuzeichnen. Durch eine Beurteilung der aufgezeichneten Werte wird dann auf einen schleichenden Druckverlust geschlossen, wenn die Werte eine fallende Tendenz aufweisen. Allerdings führt diese Vorgehensweise zu einem erheblichen Berechnungsaufwand und Speicherbedarf.

Bei indirekt arbeitenden Systemen der vorstehend erläuterten Art ist weiterhin zumeist eine Kalibriening anhand. eines " richtigen " Systemzustandes erforderlich, da deren Wirkungsweise darauf beruht, daß der Luftdruck in einem Reifen den Abrollumfang des betreffenden Reifens beeinflußt. Die Druckabhängigkeit ist jedoch sehr gering und daher schwer zu messen. Die für das Anti-Blockier-System vorhandenen Raddrehzahlsensoren werden dazu benutzt, um über die Wegmessung und den Vergleich der von den vier Rädern zurückgelegten Wege auf einen Druckverlust zurückzuschließen. Da die Umfangsänderungen der Reifen selbst bei einem größeren Druckverlust kaum auflösbar sind, müssen die Störungsquellen, insbesondere die unterschiedlichen Reifendurchmesser infolge von Reifentoleranzen oder unterschiedlicher Abnutzung bei der Auswertung der Radgeschwindigkeitssignale bzw. der abgeleiteten Signale ausgeschaltet werden. Eine übliche Vorgehensweise besteht darin, in einer Lemphase Korrekturwerte in das System einzugeben, die zum Zeitpunkt eines korrekten " Systemzustandes erfaßt werden. Dies erfolgt beispielsweise mittels. einer Kalibriertaste, die von dem Betreiber des Fahrzeugs zu betätigen ist.

Im Falle einer Fehlbedienung der Taste droht jedoch eine Verstimmung des Systems. Dies kann zu Fehlwarnungen führen, oder aber auch das Ausbleiben einer an sich notwendigen Warnung zur Folge haben. In der WO 97/09188 wird zur Entlastung des Fahrzeugbetreibers vorgeschlagen, die Lemphase automatisch durch mit den Stoßdämpfern gekoppelte Schalter zu starten, wobei die Schalter dann auslösen, wenn ein bestimmter Federweg erreicht wird. Dies setzt jedoch weiterhin voraus, daß im Zustand der Datenerfassung der Lemphase ein " korrekter " Systemzustand bei richtigem Reifendruck vorherrscht.

Weiterhin ist aus Research Disclosure, Kenneth Mason Publications, Hampshire, GB, Nr. 407, Seite 203 bekannt, in einem Reifen den Druck absolut zu messen und aus den Radgeschwindigkeitssignalen eines ABS-Systems die Drücke in den anderen Reifen mit Hilfe des gemessenen Drucks zu berechnen.

Der Erfindung die Aufgabe zugrunde, für das vorstehend erläuterte kombinierte System zur Reifendrucküberwachung eine Methodik für die Warnsignalgenerierung aufzuzeigen.

Diese Aufgabe wird entsprechend Anspruch 1 durch eine Vorrichtung der eingangs genannten Art gelöst, bei der die Auswerteeinrichtung die Differenzgrößen im Hinblick auf eine Sollwertabweichung auswertet und ein Warnsignal generiert, sofem die Sollwertabweichung einen Schwellenwert überschreitet, die Auswerteeinrichtung weiterhin dann ein Warnsignal generiert, wenn die Abweichung der den Luftdruck charakterisierenden Größe von einem Sollwert einen zugehörigen Schwellenwert überschreitet, wobei der Toleranzbereich für die zulässige Sollwertabweichung der Differenzgrößen einen kleineren Druckdifferenzbereich repräsentiert, als der Toleranzbereich für die zulässige Sollwertabweichung der den Luftdruck charakterisierenden Größe.

Hierdurch wird eine kostengünstige Möglichkeit zur Reifendrucküberwachung geschaffen, die weiterhin die von einem Anti-Blockier-System bereitgestellten Radgeschwindigkeitssignale nutzt und insoweit die Methode der indirekten Reifendrucküberwachung fortführt. Ober die zusätzliche Bereitstellung des tatsächlichen Drucks in einem Reifen wird jedoch die Auswertung der erhaltenen Signale für die Beurteilung des Auftretens eines schleichenden Druckverlustes erheblich vereinfacht.

Zur Überwachung des Luftdrucks in den Reifen wird so vorgegangen, daß zunächst für die Räder des Kraftfahrzeuges die die Radgeschwindigkeiten charakterisierenden Größen erfaßt, daraus Differenzgrößen gebildet und bei Abweichung der Differenzgrößen von einem Sollwert um mehr als einen Schwellenwert ein Warnsignal erzeugt wird. Dies entspricht grundsätzlich der oben bereits erläuterten Vorgehensweise. Zusätzlich wird jedoch an einem der Räder der Luftdruck in einem Reifen direkt gemessen. Bei einer Abweichung von einem Sollwert um mehr als einen weiteren Schwellenwert wird ein Warnsignal erzeugt. Damit läßt sich einerseits beobachten, ob an einem einzigen Reifen im Vergleich zu den anderen Reifen ein zu starker Druckabfall auftritt, wie dies beispielsweise bei einem plötzlichen Reifenschaden oder einem Ventilschaden der Fall wäre. Andererseits wird über die direkte Druckmessung festgestellt. ob das für den optimalen Fahrbetrieb zulässige Toleranzband der Reifendrücke unter bestimmtes Druckniveau abfällt um einen gleichzeitigen, schleichenden Druckverlust In allen Reifen zu erkennen.

Weiterhin werden Fehlinterpretationen bei der Datenauswertung. auf ein Minimum reduziert, da der gemessene Reifendruck als Referenzgröße verwendet wird und hierzu nicht auf abgeleitete Größen wie beispielsweise eine Historienliste zurückgegriffen werden muß.

Durch die Bereitstellung des gemessenen Luftdrucks an einem Rad als Referenzgröße lassen sich überdies die oben erläuterte Kalibrierungseinrichtung einsparen und die damit verbundenen Bedienungsfehler vermeiden. Vielmehr steht nunmehr stets und unabhängig von dem Systemzustand eine den tatsächlichen Luftdruck an einem Rad beschreibende Information zur Verfügung. Gestützt auf diese Information läßt sich in Zusammenwirkung mit der weiteren Interpretation der aus den Radgeschwindigkeitssignalen abgeleiteten Informationen eine zuverlässige Aussage über den Luftdruck in allen Reifen treffen, ohne daß hierfür der tatsächliche Luftdruck in sämtlichen Reifen gemessen Werden müßte.

Zudem repräsentiert der Toleranzbereich für die Sollwertabweichung der Differenzgrößen einen kleineren Druckdifferenzbereich, als der Toleranzbereich für die Sollwertabweichung der den Luftdruck charakterisierenden Größe. Dies erlaubt eine Vorgehensweise, bei der zunächst das allgemeine Druckniveau durch eine Referenzmessung festgestellt wird. Liegt dieses unter einem gewünschten Sollwert, so stellt die Vorrichtung in der Auswerteeinrichtung mit einem Rechenaigorithmus anhand der Radgeschwindigkeitsinformationen fest, ob zwischen den einzelnen Reifen erhebliche Überschreitungen der Schwellenwerte der Differenzgrößen bestehen. Ist letzteres nicht der Fall, so wird in dieser Zustand als ein schleichender Druckverlust kategorisiert und dem Fahrzeugbetreiber mit einem entsprechenden Signale zur Anzeige gebracht.

Liegt hingegen der gemessene Druck im zulässigen Bereich um den gewünschten Druck-Sollwert, und wird bei der Auswertung der Radgeschwindigkeitsinformationen eine Überschreitung eines Schwellenwertes der Differenzgrößen festgestellt, so wird dies als ein falscher Reifendruck an einem bestimmten Reifen diagnostiziert. Durch eine geeignete Auswertung der Radgeschwindigkeitsinformationen kann dem Fahrer mitgeteilt werden, an welchem Reifen der falsche Reifendruck vorliegt.

Prinzipiell ist es möglich, die indirekte Reifendrucküberwachung und die direkte, messende Drucküberwachung unabhängig voneinander parallel auszuführen, wobei jedes System bei Vorliegen bestimmter Bewertungskriterien ein Warnsignal generiert. Durch die Abstimmung der beiden Systeme aufeinander, insbesondere durch die Abstimmung ihrer Schwellenwerte untereinander, welche für die Generierung der Warnsignale ursächlich sind, läßt sich eine einfache und kostengünstige Reifendrucküberwachung verwirklichen, die eine hohe Zuverlässigkeit der hierbei erzeugten Informationen zu dem Reifendruckzustand erlaubt Es ist jedoch auch möglich, die aus beiden Systemen erhaltenen informationen enger miteinander zu verknüpfen. Beispielsweise kann mit dem gemessenen Reifendruck und den aus den Radgeschwindigkeitssignaien abgeleiteten Differenzgrößen der Reifendruck in denjenigen Reifen berechnet werden, an denen keine direkte Druckmessung erfolgt Eine Möglichkeit hierfür besteht beispielsweise darin, in der Auswerteeinrichtung für jeden Reifen aus der gemessenen Luftdruckgröße und den Differenzgrößen eine den Luftdruck des betreffenden Reifens charakterisierende Große zu bestimmen, deren Sollwertabweichung im Hinblick auf die Überschreitung des zugehörigen Schwellenwertes ausgewertet wird. Damit läßt sich quasi eine Einzelüberwachung für den Luftdruck in allen Reifen des Kraftfahrzeuges realisieren, ohne daß für jedes einzelne Fahrzeugrad bzw. den zugehörigen Reifen eine eigene Einrichtung zur direkten Druckmessung benötigt wird.

In der Regel wird für die Vorderräder und die Hinterräder ein unterschiedlicher Reifendruck vorgegeben. Bei Verwendung einer einzigen, direkt druckmessenden Einrichtung muß die gewünschte Druckdifferenz zwischen den Vorder- und Hinterrädern in der Auswerteeinrichtung bei der Interpretation der Differenzgrößen berücksichtigt werden. Dies kann jedoch beispielsweise dadurch vermieden werden, daß für jede Radachse des Kraftfahrzeuges an einem Rad eine Einrichtung zur direkten Messung des Luftdrucks vorgesehen wird. Hierdurch läßt sich eine sehr einfache Betriebsweise verwirklichen, bei der für jede Radachse neben dem gemessenen Luftdruck als weitere Information lediglich eine Differenzgröße benötigt wird, die aus den beiden Radgeschwindigkeitssignalen der beiden Räder der jeweiligen Radachse ableitbar ist.

Bekanntermaßen ist der Reifendruck von der Temperatur des Reifens abhängig. Es ist daher vorteilhaft, wenn der gemessene Druckwert oder der Sollwert zur Bestimmung der Abweichung von der den Luftdruck charakterisierenden Größe temperaturkompensiert wird. Dazu kann eine entsprechende Einrichtung zur Temperaturkompensation vorgesehen werden. Letztere wird beispielsweise in einen an dem Reifen oder dem Fahrzeugrad angebrachten Drucksensor in Form eines Temperatursensors eingebaut. In diesem Fall erfolgt dann eine Kompensation der gemessenen Druckgröße, so daß lediglich eine Information von dem Fahrzeugrad an die an dem Fahrzeug stationäre angebrachte Auswerteeinrichtung übertragen werden muß. Es ist jedoch auch möglich, die Temperaturinformation getrennt von der Druckinformation an die Auswerteeinrichtung zu übertragen und erst dort mit der gemessenen Druckinformation oder aber mit dem vorgegebenen Sollwert zusammenzuführen. Der vorgegebene Sollwert kann als feste Größe vorgegeben und in der Auswerteeinrichtung abgespeichert werden. In der Regel hängt jedoch der Sollwert von einer Vielzahl von weiteren Parametern wie beispielsweise dem Beladungszustand des Fahrzeugs oder dem verwendeten Reifentyp ab, die bei der Sollwertgenerierung mitberücksichtigt werden.

In einer weiteren, vorteilhaften Ausgestaltung der Erfindung werden die Raddrehzahloder Radgeschwindigkeitsgrößen jeweils mit einem über alle Raddrehzahl- oder Radgeschwindigkeitsgrößen gebildeten Mittelwert als Sollwert verglichen. Dieser Sollwert kann dann als Mitte eines Toleranzbandes dienen, auf das eine noch zulässige Sollabweichung als Schwellenwert bezogen wird.

Weiterhin ist es möglich, die Differenzgrößen beispielsweise so aus den Raddrehzahloder Radgeschwindigkeitsgrößen abzuleiten, daß diese jeweils für genau zwei Räder bestimmt werden, wobei einem der Räder die Einrichtung zur direkten Messung des Luftdrucks zugeordnet ist. In diesem Fall kann dann für jedes Rad aus der zugehörigen Differenzgröße in bezug auf ein Referenzrad und aus dem gemessenen Reifendruck in dem Referenzrad der Reifendruck des betreffenden Rades besonders einfach abgeleitet werden.

Nachfolgend wird nun die Erfindung anhand von in der Zeichnung dargestellten Ausführungsbeispielen näher erläutert. Die Zeichnung zeigt in:
- Figur 1: eine schematische Darstellung eines ersten Ausführungsbeispiels einer Vorrichtung zur Überwachung des Luftdrucks in den Reifen eines Kraftfahrzeuges nach der Erfindung,
- Figur 2: eine Darstellung zur Veranschaulichung der Betriebsweise der in Figur 1 dargestellten Vorrichtung,
- Figur 3: eine weitere Darstellung zur Erläuterung der Betriebsweise der in Figur 1 dargestellten Vorrichtung,
- Figur 4: eine Darstellung zur Veranschaulichung der Betriebsweise eines weiteren Ausführungsbeispiels einer Vorrichtung zur Überwachung des Luftdrucks in den Reifen eines Kraftfahrzeugs nach der Erfindung, und in
- Figur 5: eine weitere Darstellung zur Erläuterung der Betriebsweise der in Figur 4 dargestellten Vorrichtung.

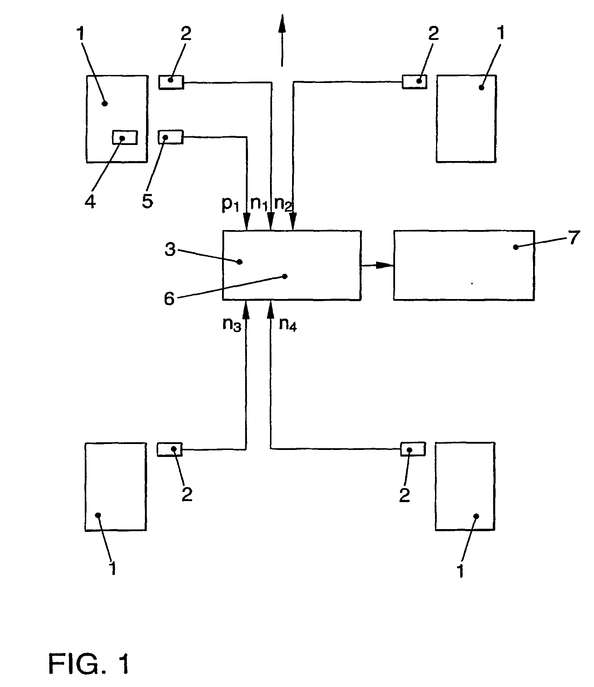

Das erste Ausführungsbeispiel in Figur 1 zeigt ein Kraftfahrzeug, von dem hier lediglich die Fahrzeugräder **1** sowie eine Vorrichtung zur Überwachung des Luftdruckes in den Reifen der Fahrzeugräder **1** dargestellt sind.

Die Vorrichtung zur Überwachung des Luftdrucks umfaßt Einrichtungen 2 zur Bestimmung der Raddrehzahlen oder anderer von die Geschwindigkeiten der Räder des Kraftfahrzeuges charakterisierenden Größen sowie weiterhin eine Einrichtung zum Berechnen von Differenzgrößen Δnᵢ₁, aus den Raddrehzahl- oder Radgeschwindigkeitsgrößen. Dabei wird hier auf ein in das Kraftfahrzeug eingebautes Anti-Blockier-System zurückgegriffen, dessen Sensoren zur Erfassung der Raddrehzahlen nᵢ sowie dessen Einrichtungen zur Bestimmung der Fahrgeschwindigkeit gleichzeitig einen Teil der Reifendrucküberwachungsvorrichtung darstellen und zur Ableitung der Geschwindigkeitsgrößen dienen.

Die erfaßten Raddrehzahl- oder Radgeschwindigkeitsgrößen, die in Figur 1 mit n₁ bis n₄ bezeichnet sind, werden in einem zentralen, stationär an dem Fahrzeug angebrachten Steuergerät 3 verarbeitet. Dieses Steuergerät 3 enthält u. a. Einrichtungen zur Berechnung der Differenzgrößen Δnᵢ₁ aus den von dem Anti-Blockier-System bereitgestellten Raddrehzahl- oder Radgeschwindigkeitsgrößen. Es ist jedoch auch möglich, dem Steuergerät 3 bereits in dem Anti-Blockier-System generierte Differenzgrößen Δnᵢ₁ zuzuführen.

Weiterhin umfaßt die Reifendrucküberwachungsvorrichtung eine Einrichtung 4 zur direkten Messung des Luftdrucks p₁ in einem Reifen eines Fahrzeugrades 1, wobei in dem Ausführungsbeispiel nach Figur 1 genau eine solche Einrichtung hier beispielhaft an dem vorderen linken Rad 1 vorgesehen ist. Diese Druckmeßeinrichtung 4 ist beispielsweise als Drucksensor in ein Reifenventil integriert, das weiterhin eine Sendeeinrichtung enthält, um den gemessenen Reifendruck p₁ oder eine diesen charakterisierende Information p₁ drahtlos an eine an dem Kraftfahrzeug stationär befestigte Empfangseinrichtung 5 zu übertragen. Eine den gemessenen Reifendruck charakterisierende Größe p₁ wird dann von der Empfangseinrichtung 5 an das Steuergerät 3 übertragen und dort weiterverarbeitet. Es ist auch möglich, die Empfangseinrichtung 5 unmittelbar in das Steuergerät 3 zu integrieren oder die Druckmessung an einer anderen Stelle des Fahrzeugrades 1, beispielsweise in der Radfelge vorzunehmen.

Zur Kompensation von Druckschwankungen infolge von Temperaturveränderungen wird der Drucksensor vorzugsweise mit einem Temperatursensor kombiniert, so daß von der Druckmeßeinrichtung bereits ein temperaturkorrigiertes Signal an die Empfangseinrichtung 5 übermittelt wird.

Die generierten Signale werden in einer Auswerteeinrichtung 6 des Steuergeräts 3 verarbeitet. Dabei werden Abweichungen von Sollwerten ermittelt. Überschreitet die Abweichung einen bestimmten Schwellenwert, so wird ein Warnsignal generiert und über eine Anzeigeeinrichtung 7 dem Fahrer des Fahrzeugs mitgeteilt. Die Warnung des Fahrers erfolgt optisch und/oder akustisch im Sichtbereich, so daß diese während des Fahrbetriebs wahrnehmbar ist. Dabei kann auch eine Differenzierung nach der Art des aufgetretenen Fehlers vorgenommen werden, um dem Fahrer mitzuteilen, an welchem Reifen eine Abweichung des Luftdrucks aufgetreten ist, oder ob das Druckniveau an sämtlichen Reifen, beispielsweise aufgrund schleichender Verluste, unter einen kritischen Wert gesunken ist.

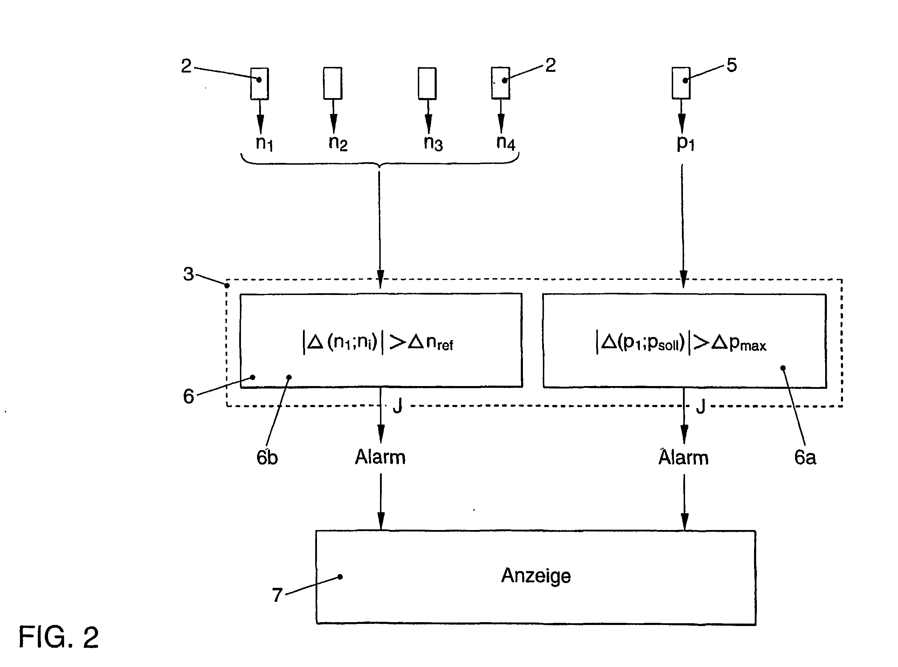

Figur 2 zeigt ein Beispiel für die Betriebsweise der vorstehend erläuterten Vorrichtung. Hierbei werden die indirekte Reifendrucküberwachung auf der Grundlage der Raddrehzahl- oder Radgeschwindigkeitsgrößen und die direkte Druckmessung an einem Fahrzeugrad 1 parallel vorgenommen. Dies erfolgt in regelmäßigen Zeitintervallen oder auch kontinuierlich während des Fahrbetriebs. Verlassen die auszuwertenden Größen einen bestimmten Toleranzbereich, so wird jeweils individuell ein Warnsignal erzeugt.

Bei der direkten Druckmessung erfolgt dies dann, wenn die Abweichung zwischen dem gemessenen Reifendruck p₁ und einem vorgegebenen Sollwert pₛₒₗₗ einen bestimmten Schwellenwert bzw. die Druckdifferenz Δpₘₐₓ, die einen für den optimalen Fahrbetrieb noch akzeptablen Toleranzbereich repräsentiert, überschreitet. Dazu ist in der Auswerteeinrichtung 6 eine geeignete Vergleichseinrichtung 6a vorgesehen. Der Sollwert pₛₒₗₗ ist hier nicht notwendigerweise ein fest vorgegebener Parameter. Vielmehr wird dieser an die Betriebszustände des Fahrzeuges angepaßt, um beispielsweise die Beladung des Fahrzeugs oder den verwendeten Reifentyp zu berücksichtigen. Dazu wird bevorzugt ein Sollwertgeber vorgesehen, der in der Figur 2 jedoch nicht dargestellt ist.

In gleicher Weise erfolgt hier eine Überwachung der Differenzgrößen Δnᵢ₁ in bezug auf einen Schwellenwert in Form einer noch akzeptablen Raddrehzahl- oder Radgeschwindigkeitsdifferenz Δn_{ref} in einer weiteren Vergleichseinrichtung 6b, wobei die Differenzbildung jeweils zwischen einem Raddrehzahl- oder Radgeschwindigkeitswert eines Fahrzeugrades und einem Raddrehzahl- oder Radgeschwindigkeitswert desjenigen Fahrzeugrades erfolgt, an dem die direkte Druckmessung vorgenommen wird. In dem Ausführungsbeispiel ist für sämtliche Werte ein gleicher Schwellenwert Δn_{ref} vorgesehen, dessen Überschreitung, vereinfacht gesprochen, die Erzeugung eines Warnsignals nach sich zieht Jedoch kann auch für jedes Radpaar ein eigener Schwellenwert Δn_{ref} definiert werden.

Um die Gefahr eines Fehlalarms auszuschließen, wird bei einer Überschreitung eines Schwellenwertes eine Überprüfung dieses Ergebnisses vorgenommen, beispielsweise indem die Ausgangsinformationen, das heißt die Raddrehzahl- oder Radgeschwindigkeitsgrößen und die den Luftdruck in einem Reifen charakterisierende Größe neu ermittelt und ausgewertet werden. Ein Warnsignal wird nur dann erzeugt, wenn sich die erste Prognose etabliert. Dabei wird weiterhin sichergestellt, daß sich das Fahrzeug in einem für die Reifendrucküberwachung geeigneten Fahrzustand befindet, das heißt beispielsweise nicht gerade eine Kurve durchfährt. Das Durchfahren einer Kurve kann u. a. durch das Erfassen des Lenkeinschlagwinkels festgestellt werden. In diesem Fall wird dann die Auswertung der informationen, welche der Reifendrucküberwachung zugrunde liegen, unterdrückt.

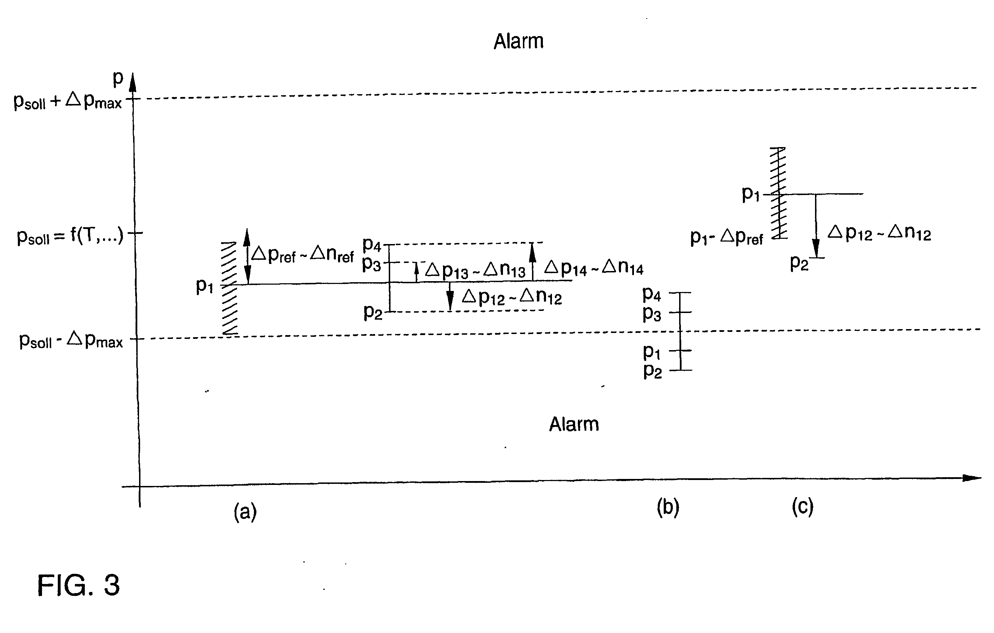

Die Wirkungsweise des ersten Ausführungsbeispiels erschließt sich aus Figur 3, in der mit (a), (b) und (c) drei unterschiedliche Reifendruckzustände des Fahrzeuges dargestellt sind. Dabei repräsentiert (a) einen Normalzustand, in dem in jedem Reifen ein "richtiger" Reifendruck pᵢ (i=1 bis 4) vorherrscht. Weiterhin sind in Figur 3 die Druckdifferenzen Δp₁ᵢ zu demjenigen Reifen aufgetragen, an dem die direkte Druckmessung pᵢ erfolgt. Diesen Druckdifferenzen p₁ᵢ entsprechen Differenzgrößen Δn₁ᵢ in Raddrehzahl- oder Radgeschwindigkeitsgrößen, die aus der indirekten Reifendrucküberwachung bekannt sind, wobei gegebenenfalls ein Korrekturfaktor eingerechnet sein kann. In dem Normalzustand (a) von Figur 3 liegen die Differenzgrößen alle innerhalb des zulässigen Toleranzbandes mit der maximal zulässigen Abweichung Δn_{ref}, das in Figur 3 auf die Druckgröße Δp_{ref} abgebildet und schraffiert dargestellt ist. Wie Figur 3 weiter entnommen werden kann, ist dieses Toleranzband schmäler als das Toleranzband für den Solldruckwert pₛₒₗₗ.

Im Falle des Zustandes (b) ist infolge eines schleichenden Druckverlustes das Druckniveau in sämtlichen Reifen abgesunken. Sobald der Druck in demjenigen Reifen, in dem die direkte Druckmessung erfolgt, unter die untere zulässige Schwelle pₛₒₗₗ- Δpₘₐₓ des Druckwertes fällt, wird ein Alarmsignal generiert. Da das Toleranzband für die indirekte Reifendrucküberwachung im Vergleich zu dem Toleranzband für die direkte Druckmessung sehr schmal ist, ist es vollkommen ausreichend, die direkte Druckmessung lediglich an einem einzigen Reifen des Fahrzeuges vorzunehmen. Eine direkte Druckmessung kann auch lediglich an einem einzigen Reifen einer Radachse erfolgen. In jedem Fall werden gegenüber einer direkten Druckmessung an allen Reifen entsprechende, kostenträchtige Erfassungseinrichtungen eingespart.

Der Zustand (c) repräsentiert den Fall, daß der Druck p₂ in einem Reifen gegenüber den Drücken in den anderen Reifen deutlich abfällt, ohne daß jedoch der Druck p₁ in dem direkt überwachten Reifen den zulässigen Toleranzbereich verläßt. Ein solcher Druckabfall wird aufgrund der bei konstanter Fahrzeuggeschwindigkeit erhöhten Raddrehzahl bei der indirekten Reifendrucküberwachung in der Vergleichseinrichtung 6b des Steuergeräts 3 festgestellt und dem Fahrer entsprechend signalisiert, wobei diesem gleichzeitig mitgeteilt werden kann, an welchem Reifen die Störung aufgetreten ist.

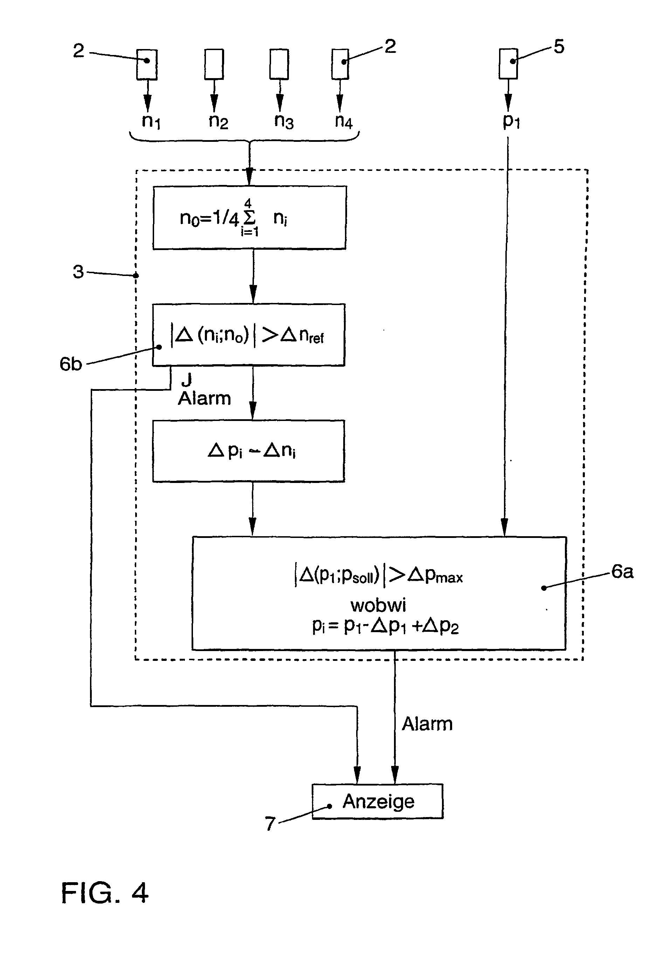

Figur 4 zeigt ein weiteres Ausführungsbeispiel einer Vorrichtung zur Reifendrucküberwachung, die sich von dem ersten Ausführungsbeispiel vor allem durch die Auswertung der zur Verfügung gestellten Ausgangsinformationen unterscheidet. So erfolgt in dem zweiten Ausführungsbeispiel in dem Steuergerät 3 bei der Verarbeitung der Raddrehzahl- oder Radgeschwindigkeitsgrößen zunächst die Ermittlung einer Bezuggröße n₀, die hier den Mittelwert der Raddrehzahl- oder Radgeschwindigkeitsgrößen nᵢ darstellt. In Abwandlung der dargestellten Ausführungsform ist es auch möglich, einen gewichteten Mittelwert zu bilden, wobei jeder Raddrehzahl- oder Radgeschwindigkeitsgröße nᵢ ein eigener Wichtungsfaktor zugeordnet wird. Aus den einzelnen Raddrehzahl- oder Radgeschwindigkeitsgrößen nᵢ werden mit der Bezuggröße n₀ Differenzgrößen Δnᵢ generiert und zu einem Schwellenwert Δn_{ref} in Bezug gesetzt. Bei einer Überschreitung des Schwellenwertes Δn_{ref} wird ein Warnsignal generiert und wie in dem ersten Ausführungsbeispiel zur Anzeige gebracht. Auf diese Weise läßt sich das Auftreten einer Druckdifferenz zwischen den einzelnen Reifen effizient erfassen.

Die direkte Reifendrucküberwachung kann wie in dem ersten Ausführungsbeispiel parallel geschaltet erfolgen. In dem in Figur 4 dargestellten Fall werden jedoch aus den Differenzgrößen Δnᵢ und dem direkt gemessenen Druck p₁ die Drücke in den nicht direkt überwachten Reifen ermittelt und mit einem Sollwert pₛₒₗₗ für den Absolutdruck verglichen. Überschreitet die Abweichung von dem Solldruckwert pₛₒₗₗ einen bestimmten Schwellenwert Δpₘₐₓ, so wird wiederum ein Warnsignal ausgelöst. Diese Vorgehensweise hat den Vorteil, daß auch dann bereits ein Warnsignal ausgelöst wird, wenn der Druck in einem nicht direkt überwachten Reifen das Toleranzband für den Absolutdruck verläßt

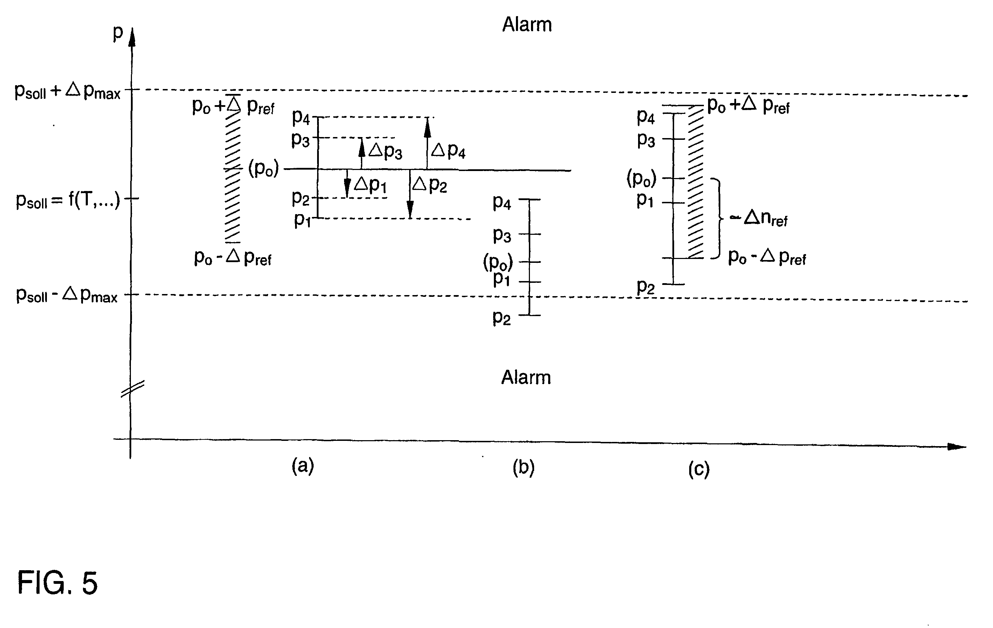

Die Wirkungsweise des in Figur 4 dargestellten Ausführungsbeispiels ist in Figur 5 veranschaulicht. Dabei repräsentiert (a) wieder einen Normalzustand, in dem in sämtlichen Reifen ein korrekter Reifendruck pᵢ vorherrscht, das heißt, daß sich die Drücke in den einzelnen Reifen in den zulässigen Toleranzbereichen befinden. Bei einem schleichenden Druckverlust, wie er anhand des Zustandes (b) dargestellt ist, wird dies bereits erkannt, wenn der Druck, hier der Druck p₂, in einem einzigen Reifen das Druck-Toleranzband verläßt, obwohl an diesem Reifen eine direkte Druckmessung nicht vorgenommen wird. Der Zustand (c) zeigt wiederum den Fall, daß in einem Reifen ein gegenüber den anderen Reifen deutlicher Druckunterschied auftritt, der sich beispielsweise bei einem Reifenschaden oder Ventilschaden einstellt. Dies wird auch hier wiederum bereits bei der indirekten Reifendrucküberwachung als Überschreitung des Schwellenwertes Δn_{ref} festgestellt und dem Fahrer zur Anzeige gebracht.

Die vorstehend beschriebenen Vorrichtungen bzw. Verfahren ermöglichen auf besonders einfache Art und Weise eine zuverlässige und kostengünstige Reifendrucküberwachung an einem Kraftfahrzeug, die aufgrund ihrer Stützung auf einen an lediglich einem Teil der Reifen direkt gemessenen Reifendruck weitestgehend frei von Eingriffen des Fahrers arbeitet und so gegen Fehlbedienungen unempfindlich ist.

### BEZUGSZEICHENLISTE

- 1: Fahrzeugrad
- 2: Einrichtung zur Bestimmung der Raddrehzahl oder anderer die Geschwindigkeit eines Fahrzeugrades charakterisierenden Größen (Raddrehzahl- oder Radgeschwindigkeitssensor)
- 3: Steuergerät
- 4: Einrichtung zur direkten Messung des Luftdruckes (Drucksensor)
- 5: Empfangseinrichtung
- 6: Auswerteeinrichtung
- 6a: Vergleichseinrichtung
- 6b: Vergleichseinrichtung
- 7: Anzeigeeinrichtung
- nᵢ: Raddrehzahl oder Radgeschwindigkeitsgröße eines Fahrzeugrades i
- Δnᵢ₁,: Abweichung der Raddrehzahl oder Geschwindigkeitsgröße nᵢ von der Raddrehzahl oder Geschwindigkeitsgröße n₁ des Fahrzeugrades mit direkter Druckmessung
- n₀: Bezuggröße (Mittelwert der Raddrehzahlen oder Geschwindigkeitsgrößen nᵢ)
- Δnᵢ: Abweichung der Raddrehzahl oder Geschwindigkeitsgröße nᵢ von der Bezuggröße n₀
- Δn_{ref}: Zulässige Abweichung einer Raddrehzahl oder Geschwindigkeitsgröße
- pᵢ: Reifendruck bzw. den Reifendruck charakterisierende Größe
- pₛₒₗₗ: Sollwert für den Reifendruck des Fahrzeugrades mit direkter Druckmessung
- Δpₘₐₓ: maximal zulässigen Abweichung von dem Druck-Sollwert pₛₒₗₗ
- Δpᵢ: auf einen Druckwert abgebildete Abweichung der Geschwindigkeitsgröße nᵢ von der Bezuggröße n₀

## Patentansprüche

1. Vorrichtung zur Überwachung des Luftdruckes in den Reifen eines Kraftfahrzeuges, umfassend:
- Einrichtungen (2) zur Bestimmung von die Geschwindigkeiten der Räder des Kraftfahrzeuges charakterisierenden Größen (nᵢ),
- eine Einrichtung (6b) zum Berechnen von Differenzgrößen (Δnᵢ; Δnᵢ₁) aus den Radgeschwindigkeitsgrößen (nᵢ),
- eine Einrichtung (6) zur Auswertung der Differenzgrößen (Δnᵢ; Δnᵢ₁),
- eine Einrichtung (4, 5) zur direkten Messung des Luftdrucks (pᵢ₁) in einem Reifen eines Rades (1) und zur Übertragung einer den Luftdruck charakterisierenden Größe (pᵢ₁) an die Auswerteeinrichtung (6),
**dadurch gekennzeichnet, daß**
- die Auswerteeinrichtung (6) die Differenzgrößen (Δnᵢ; Δnᵢ₁) im Hinblick auf eine Sollwertabweichung auswertet und ein Warnsignal generiert, sofern die Sollwertabweichung einen Schwellenwert (Δn_{ref}) überschreitet,
- die Auswerteeinrichtung (6) weiterhin dann ein Warnsignal generiert, wenn die Abweichung der den Luftdruck charakterisierenden Größe (p₁) von einem Sollwert (pₛₒₗₗ) einen zugehörigen Schwellenwert (Δpₘₐₓ) überschreitet, wobei
- der Toleranzbereich für die zulässige Sollwertabweichung der Differenzgrößen (Δnᵢ; Δnᵢ₁) einen kleineren Druckdifferenzbereich repräsentiert, als der Toleranzbereich für die zulässige Sollwertabweichung der den Luftdruck charakterisierenden Größe (p₁).

2. Vorrichtung nach Anspruch 1, **dadurch gekennzeichnet, daß** in der Auswerteeinrichtung (6) für jeden Reifen aus der gemessenen Luftdruckgröße (p₁) und den Differenzgrößen (Δnᵢ) eine den Luftdruck des betreffenden Reifens charakterisierende Größe (pᵢ) bestimmt wird, deren Sollwertabweichung im Hinblick auf die Überschreitung des zugehörigen Schwellenwertes (Δₚₘₐₓ) ausgewertet wird.

3. Vorrichtung nach Anspruch 1 oder 2, **dadurch gekennzeichnet, daß** eine Einrichtung zur Temperaturkompensation vorgesehen ist, zur Kompensation der gemessenen Luftdruckgröße (p₁) oder des Sollwertes (pₛₒₗₗ) zur Bestimmung der Abweichung der den Luftdruck charakterisierenden Größe (p₁).

4. Vorrichtung nach einem der Ansprüche 1 bis 3, **dadurch gekennzeichnet, daß** die Radgeschwindigkeitsgrößen (nᵢ) jeweils mit einem über alle Radgeschwindigkeitsgrößen (nᵢ) gebildeten Mittelwert als Sollwert (n₀) verglichen werden.

5. Vorrichtung nach einem der Ansprüche 1 bis 3, **dadurch gekennzeichnet, daß** die Differenzgrößen (Δnᵢ₁) jeweils für zwei Räder (1) bestimmt werden, wobei einem der Räder (1) die Einrichtung (4, 5) zur direkten Messung des Luftdrucks zugeordnet ist.

6. Vorrichtung nach einem der Ansprüche 1 bis 5, **dadurch gekennzeichnet, daß** für jede Radachse des Kraftfahrzeuges an einem Rad eine Einrichtung (4, 5) zur direkten Messung des Luftdrucks vorgesehen ist.

7. Verfahren zur Überwachung des Luftdrucks in den Reifen eines Kraftfahrzeuges, bei dem
- für die Räder (1) des Kraftfahrzeuges die Radgeschwindigkeit charakterisierende Größen (nᵢ) erfaßt, daraus Differenzgrößen (Δnᵢ; Δnᵢ₁) gebildet und bei Abweichung der Differenzgrößen von einem Sollwert um mehr als einen Schwellenwert (Δn_{ref}) ein Warnsignal erzeugt wird,
- an einem der Räder der Luftdruck in einem Reifen direkt gemessen wird und bei einer Abweichung von einem Sollwert (pₛₒₗₗ) um mehr als einen weiteren Schwellenwert (Δₚₘₐₓ) ein Warnsignal erzeugt wird, wobei
- der Toleranzbereich für die Sollwertabweichung der Differenzgrößen (Δnᵢ; Δnᵢ₁) einen kleineren Druckdifferenzbereich repräsentiert, als der Toleranzbereich für die Sollwertabweichung der den Luftdruck charakterisierenden Größe (pᵢ;p₁).

8. Verfahren nach Anspruch 7, **dadurch gekennzeichnet, daß** für jeden Reifen aus der gemessenen Luftdruckgröße (p₁) und den Differenzgrößen eine den Luftdruck des betreffenden Reifens charakterisierende Größe (pᵢ) bestimmt wird, deren Sollwertabweichung im Hinblick auf die Überschreitung des zugehörigen Schwellenwertes (Δpₘₐₓ) ausgewertet wird.

9. Verfahren nach einem der Ansprüche 7 oder 8, **dadurch gekennzeichnet, daß** die gemessene Druckgröße (p₁) oder der Sollwert (pₛₒₗₗ) für die den Luftdruck charakterisierende Größe (p₁) temperaturkompensiert wird.

10. Verfahren nach einem der Ansprüche 7 bis 9, **dadurch gekennzeichnet, daß** die Radgeschwindigkeitsgrößen (nᵢ) jeweils mit einem über alle Radgeschwindigkeitsgräßen (nᵢ) gebildeten Mittelwert als Sollwert (n₀) verglichen werden.

11. Verfahren nach einem der Ansprüche 7 bis 10, **dadurch gekennzeichnet, daß** die Differenzgrößen (Δnᵢ₁) jeweils für zwei Räder (1) bestimmt werden, wobei an einem der Räder (1) der Luftdruck direkt gemessen wird.

12. Verfahren nach einem der Ansprüche 7 bis 11, **dadurch gekennzeichnet, daß** für jede Radachse des Kraftfahrzeuges an einem Rad (1) der Luftdruck direkt gemessen wird.

## Claims

1. Device for monitoring the air pressure in the tyres of a motor vehicle, comprising:
- apparatuses (2) for determining variables (nᵢ) which characterize the speeds of the wheels of the motor vehicle,
- an apparatus (6b) for calculating differential variables (Δnᵢ; Δnᵢ₁) from the wheel speed variables (nᵢ),
- an apparatus (6) for evaluating the differential variables (Δnᵢ; Δnᵢ₁) ,
- an apparatus (4, 5) for directly measuring the air pressure (pᵢ₁) in a tyre of a wheel (1) and for transmitting a variable (pᵢ₁) which characterizes the air pressure to the evaluation apparatus (6),
**characterized in that**
- the evaluation apparatus (6) evaluates the differential variables (Δnᵢ; Δnᵢ₁) with respect to a setpoint value deviation and generates a warning signal if the setpoint deviation exceeds a threshold value (Δn_{ref}) ,
- the evaluation apparatus (6) continues to generate a warning signal if the deviation of the variable (p₁) which characterizes the air pressure from a setpoint value (pₛₑₜₚ) exceeds an associated threshold value (Δpₘₐₓ),
- the tolerance range for the permitted setpoint value deviation of the differential variables (Δnᵢ; Δnᵢ₁) representing a smaller pressure difference range than the tolerance range for the permitted setpoint value deviation of the variable (p₁) which characterizes the air pressure.

2. Device according to Claim 1, **characterized in that** a variable (pᵢ) which characterizes the air pressure of the respective tyre, the setpoint value deviation of which is evaluated with respect to the upward transgression of the associated threshold value (Δpₘₐₓ) is determined in the evaluation apparatus (6) for each tyre, from the measured air pressure variable (p₁) and the differential variables (Δnᵢ).

3. Device according to Claim 1 or 2, **characterized in that** an apparatus is provided for temperature compensation, in order to compensate the measured air pressure variable (p₁) or the setpoint value (pₛₑₜₚ) in order to determine the deviation from the variable (p₁) which characterizes the air pressure.

4. Device according to one of Claims 1 to 3, **characterized in that** the wheel speed variables (nᵢ) are each compared with a mean value, formed over all the wheel speed variables (nᵢ), as a setpoint value (n₀).

5. Device according to one of Claims 1 to 3, **characterized in that** the differential variables (Δnᵢ) are each determined for two wheels (1), the apparatus (4, 5) for directly measuring the air pressure being assigned to one of the wheels (1).

6. Device according to one of Claims 1 to 5, **characterized in that** an apparatus (4, 5) for directly measuring the air pressure is provided for each wheel axis of the motor vehicle, on one wheel.

7. Method for monitoring the air pressure in the tyres of a motor vehicle, in which
- variables (nᵢ) which characterize the wheel speed are sensed for the wheels (1) of the motor vehicle, differential variables (Δnᵢ; Δnᵢ₁) are formed therefrom and when the differential variables deviate from a setpoint value by more than a threshold value (Δn_{ref}) a warning signal is generated,
- the air pressure in a tyre is measured directly on one of the wheels and when it deviates from a setpoint value (pₛₑₜₚ) by more than a further threshold value (Δpₘₐₓ) a warning signal is generated,
- the tolerance range for the setpoint value deviation of the differential variables (Δnᵢ; Δnᵢ₁) representing a smaller pressure difference range than the tolerance range for the setpoint value deviation of the variable (pᵢ ; p₁) which characterizes the air pressure.

8. Method according to Claim 7, **characterized in that** a variable (pᵢ) which characterizes the air pressure of the respective tyre is determined for each tyre from the measured air pressure variable (p₁) and the differential variables, the setpoint value deviation of which variable (pᵢ) is evaluated with respect to the upward transgression of the associated threshold value (Δpₘₐₓ) .

9. Method according to one of Claims 7 or 8, **characterized in that** the measured pressure variable (p₁) or the setpoint value (pₛₑₜₚ) is temperature-compensated for the variable (p₁) which characterizes the air pressure.

10. Method according to one of Claims 7 to 9, **characterized in that** the wheel speed variables (nᵢ) are each compared with a mean value, formed over all the wheel speed variables (nᵢ), as a setpoint value (n₀).

11. Method according to one of Claims 7 to 10, **characterized in that** the differential variables (Δnᵢ₁) are each determined for two wheels (1), the air pressure being measured directly at one of the wheels (1).

12. Method according to one of Claims 7 to 11, **characterized in that** the air pressure is measured directly for each wheel axis of the motor vehicle, on one wheel (1).

## Revendications

1. Dispositif de surveillance de la pression d'air dans les pneus d'un véhicule automobile, comprenant :
- des dispositifs (2) de détermination des variables (ni) caractérisant les vitesses des roues du véhicule automobile,
- un dispositif (6b) de calcul de variables différentielles (Δnᵢ ; Δnᵢ₁) à partir des variables de vitesse des roues (nᵢ),
- un dispositif (6) d'exploitation des variables différentielles (Δnᵢ ;Δnᵢ₁),
- un dispositif (4, 5) de mesure directe de la pression d'air (pᵢ₁) dans un pneu d'une roue (1) et de transmission d'une variable (pᵢ₁) caractérisant la pression d'air au dispositif d'exploitation (6),
**caractérisé en ce que**
- le dispositif d'exploitation (6) exploite les variables différentielles (Δnᵢ;Δnᵢ₁) au niveau d'un écart par rapport à une valeur théorique et génère un signal d'alarme dans la mesure où l'écart par rapport à la valeur théorique dépasse une valeur seuil (Δn_{réf}),
- le dispositif d'exploitation (6) génère également un signal d'alarme si l'écart de la variable (p₁) caractérisant la pression d'air par rapport à une valeur théorique (p_{théo}) dépasse une valeur seuil correspondante (Δpₘₐₓ), sachant que
- la plage de tolérance pour l'écart admissible par rapport à la valeur théorique des variables différentielles (Δnᵢ ; Δₙᵢ₁) représente une plus petite plage de différence de pression que la plage de tolérance pour l'écart admissible par rapport à la valeur théorique de la variable (p₁) caractérisant la pression d'air.

2. Dispositif selon la revendication 1, **caractérisé en ce que**, dans le dispositif d'exploitation (6), pour chaque pneu, on détermine, à partir de la variable de pression d'air mesurée (p₁) et des variables différentielles (Δnᵢ), une variable (pᵢ) caractérisant la pression d'air du pneu concerné, dont l'écart par rapport à la valeur théorique est exploité au niveau du dépassement de la valeur seuil (Δpₘₐₓ) correspondante.

3. Dispositif selon la revendication 1 ou 2, **caractérisé en ce qu'**il est prévu un dispositif de compensation de température pour la compensation de la variable de pression d'air mesurée (p₁) ou de la valeur théorique (p_{théo}) pour déterminer l'écart de la variable (p₁) caractérisant la pression d'air.

4. Dispositif selon l'une quelconque des revendications 1 à 3, **caractérisé en ce que** les variables de vitesse des roues (nᵢ) sont comparées respectivement à une valeur moyenne servant de valeur théorique (n₀) et constituée à l'aide de toutes les variables de vitesse des roues (nᵢ).

5. Dispositif selon l'une quelconque des revendications 1 à 3, **caractérisé en ce que** les variables différentielles (Δnᵢ₁) sont déterminées respectivement pour deux roues (1), le dispositif (4, 5) de mesure directe de la pression d'air étant associé à une des roues (1).

6. Dispositif selon l'une quelconque des revendications 1 à 5, **caractérisé en ce que**, pour chaque essieu de roues du véhicule automobile, il est prévu sur une roue un dispositif (4, 5) de mesure directe de la pression d'air.

7. Procédé de surveillance de la pression d'air dans les pneus d'un véhicule automobile, dans lequel
- pour les roues (1) du véhicule automobile, les variables (nᵢ) caractérisant la vitesse des roues sont déterminées, des variables différentielles (Δnᵢ;Δnᵢ₁) sont constituées à partir de là et, en cas d'écart des variables différentielles par rapport à une valeur théorique à raison de plus d'une valeur seuil (Δn_{réf}), un signal d'alarme est généré,
- sur un des jeux de roues, la pression d'air est mesurée directement dans un pneu et, en cas d'écart par rapport à une valeur théorique (p_{théo}) à raison de plus d'une autre valeur seuil (Δpₘₐₓ), un signal d'alarme est généré, sachant que
- la plage de tolérance pour l'écart par rapport à la valeur théorique des variables différentielles (Δnᵢ;Δnᵢ₁) représente une plus petite plage de différence de pression que la plage de tolérance pour l'écart par rapport à la valeur théorique de la variable caractérisant la pression d'air (pᵢ ; p₁).

8. Procédé selon la revendication 7, **caractérisé en ce que,** pour chaque pneu, on détermine à partir de la variable de la pression d'air mesurée (p₁) et des variables différentielles une variable (pᵢ) caractérisant la variable de la pression d'air du pneu concerné, dont l'écart par rapport à la valeur théorique est exploité au niveau du dépassement de la valeur seuil (Δpₘₐₓ) correspondante.

9. Procédé selon l'une quelconque des revendications 7 ou 8, **caractérisé en ce que** la variable de pression mesurée (p₁) ou la valeur théorique (p_{théo}) pour la variable (p₁) caractérisant la pression d'air est compensée au niveau température.

10. Procédé selon l'une quelconque des revendications 7 à 9, **caractérisé en ce que** les variables des vitesses des roues (nᵢ) sont comparées respectivement à une valeur moyenne servant de valeur théorique (n₀) et constituée à l'aide de toutes les variables de vitesse des roues (nᵢ).

11. Procédé selon l'une quelconque des revendications 7 à 10, **caractérisé en ce que** les variables différentielles (Δnᵢ₁) sont déterminées respectivement pour deux roues (1), la pression d'air étant mesurée directement sur une des roues (1).

12. Procédé selon l'une quelconque des revendications 7 à 11, **caractérisé en ce que** la pression d'air est mesurée directement pour chaque essieu de roues du véhicule automobile sur une roue (1).
